# EUROPÄISCHE PATENTSCHRIFT

(11) **EP 3 537 573 B1**
(45) Veröffentlichungstag und Bekanntmachung des Hinweises auf die Patenterteilung: **20.04.2022**
(21) Anmeldenummer: 19160734.0
(22) Anmeldetag: 05.03.2019
(51) Int. Cl.: H02K 5/16, F16C 41/04, H02K 7/08

(54) **FIXIERELEMENT ZUR FIXIERUNG DER ROTORWELLE EINER ELEKTRISCHEN MASCHINE AN DESSEN STATOR, SOWIE ELEKTRISCHE MASCHINE MIT EINEM SOLCHEN FIXIERELEMENT**
FIXING ELEMENT FOR FIXING THE ROTOR SHAFT OF AN ELECTRIC MACHINE TO THE STATOR AND ELECTRIC MACHINE COMPRISING SUCH A FIXING ELEMENT
ÉLÉMENT DE FIXATION PERMETTANT DE FIXER L'ARBRE DE ROTOR D'UNE MACHINE ÉLECTRIQUE À SON STATOR AINSI QUE MACHINE ÉLECTRIQUE DOTÉE D'UN TEL ÉLÉMENT DE FIXATION

(30) Priorität: 06.03.2018 AT 501832018
(43) Veröffentlichungstag der Anmeldung: 11.09.2019
(73) Patentinhaber: Traktionssysteme Austria GmbH, 2351 Wiener Neudorf (AT)
(72) Erfinder: WALCHER, Markus, 2351 Wiener Neudorf (AT)
(74) Vertreter: SONN Patentanwälte OG

(56) Entgegenhaltungen:
- EP-A1- 2 525 112
- EP-A2- 2 014 878
- DE-A1- 1 933 812
- DE-A1- 19 836 191
- DE-B- 1 114 576
- DE-B- 1 166 350
- DE-B- 1 167 967
- JP-A- 2014 204 594

## Beschreibung

Die Erfindung betrifft ein Fixierelement zur Fixierung der Rotorwelle einer elektrischen Maschine, insbesondere elektrischen Traktionsmaschine, an deren Stator, mit einem Stempel zum Anpressen an die Rotorwelle, welcher Stempel aus Kunststoff besteht.

Ebenso betrifft die vorliegende Erfindung eine elektrische Maschine, insbesondere elektrische Traktionsmaschine, zur Anordnung in einem Drehgestell eines Schienenfahrzeugs, mit einem mit einer Rotorwelle drehfest verbundenen Rotor, einem Stator und beiderseits angeordneten Lagerschilden enthaltend Lager zur drehbaren Aufnahme der Rotorwelle.

Beim Transport elektrischer Maschinen kann es durch Vibrationen des stillstehenden Rotors gegenüber dem Stator zu kleinen Schäden an den Lagern kommen, welche als sog. Stillstandsmarken bezeichnet werden. Während kleinere Schäden durch das Aufschlagen des Wälzkörpers auf dem Lagerring zu keinen oder nur geringen Auswirkungen führen, können größere oder viele derartige Stillstandsmarken zu einer Lärmentwicklung bis zu einem Schaden oder sogar Totalausfall des Lagers führen. Der Austausch der Wellenlager erfordert entsprechende Wartungsarbeiten, während der die elektrische Maschine bzw. die mit der elektrischen Maschine ausgestattete Einrichtung nicht zur Verfügung steht.

Insbesondere bei Traktionsmaschinen für Schienenfahrzeuge kann es beim Transport der elektrischen Maschine zum Fabrikationsort, wo der Einbau in ein Drehgestell erfolgt, und beim Transport des Drehgestells an den Ort, wo der Einbau des Drehgestells in den Wagenkasten durchgeführt wird, sowie beim Transport des fertigen Schienenfahrzeugs an den jeweiligen Einsatzort zu solchen Lagerschäden kommen. Zur Vermeidung von Lagerschäden werden Fixierschrauben eingesetzt, welche eine Relativbewegung der Rotorwelle gegenüber dem Stator verhindern. Nachteilig bei derartigen Fixierschrauben ist, dass eine Manipulation, beispielsweise eine Bewegung des Drehgestells oder des fertigen Schienenfahrzeugs erst nach Lösung der Fixierschrauben möglich ist, da sonst die elektrische Maschine blockiert wird. Die Lösung der Fixierung ist jedoch insbesondere dann, wenn die elektrische Maschine bereits im Drehgestell eingebaut ist, bzw. wenn das Drehgestell bereits im Schienenfahrzeug montiert ist, besonders aufwendig, zeit- und kostenintensiv. Aus diesem Grund wird häufig auf das Vorsehen einer Transportsicherung beim Herstellungsprozess in einem Fahrzeug verzichtet, was wiederum zu den oben erwähnten Lagerschäden führen kann.

Die EP 2 743 510 A1 beschreibt eine Transportsicherung für eine elektrische Maschine, wobei eine Platte mit der Endfläche der Rotorwelle und Teilen des Stators verbunden wird, sodass eine Drehung des Rotors gegenüber dem Stator unterbunden werden kann.

Auch die DE 11 14 576 B beschreibt eine ähnliche Transportsicherung mit Hilfe einer gegen die Welle gepresste Lasche, allenfalls mit einem plastischen Zwischenstück zwischen Lasche und Welle.

Die DE 20 2015 107 053 U1 zeigt die Fixierung eines elektrischen Antriebsmotors über verschiedene Varianten einer speziell gestalteten einstückigen Bremsvorrichtung, welche eine radiale Bremskraft auf die Rotorwelle ausübt.

Die Aufgabe besteht in der Schaffung eines oben genannten Fixierelements und einer elektrischen Maschine mit einem solchen Fixierelement, durch welche ein höchstmöglicher Schutz der Lager beim Transport der stillstehenden elektrischen Maschine erzielt werden kann, gleichzeitig aber eine Manipulation der elektrischen Maschine eines Drehgestells mit derartigen elektrischen Maschinen oder eines Schienenfahrzeugs mit derartigen Drehgestellen erleichtert bzw. ermöglicht wird. Der Aufwand für die Montage des Fixierelements soll möglichst gering sein. Nachteile bekannter Vorrichtungen sollen vermieden oder zumindest reduziert werden.

Gelöst wird die erfindungsgemäße Aufgabe durch ein oben genanntes Fixierelement, wobei der Stempel aus unterhalb 100°C verformbarem thermoplastischem und rückstandsfrei schmelzbarem Kunststoff besteht, sodass es durch eine Drehung der Rotorwelle gegen Widerstand des Fixierelements gegenüber dem Stator zu einer Wärmeentwicklung kommt, welche zu einer einer Verformung des Stempels und zu einem rückstandsfreien Schmelzen des Materials des Stempels führt. Durch diese Maßnahme wird erreicht, dass einerseits die Rotorwelle ausreichend gegenüber dem Stator fixiert werden kann, indem eine entsprechende Kraft über den Stempel des Fixierelements auf die Rotorwelle aufgebracht wird. Andererseits wird durch die Verwendung des unterhalb 100°C verformbaren thermoplastischen und im Wesentlichen rückstandsfrei schmelzbaren Kunststoffs für den Stempel eine Drehung der Rotorwelle gegenüber dem Stator gegen Widerstand ermöglicht. Eine Verwendung derartiger Kunststoffe gewährleistet, dass bei einer Manipulation der elektrischen Maschine durch die Reibung zwischen Stempel und Rotorwelle rasch die Verformungstemperatur erzielt wird, bei der eine Verformung des Stempels stattfindet. Eine Verformung der Rotorwelle, die üblicherweise aus Stahl gebildet ist, wird hingegen verhindert. Schließlich führt die thermoplastische Verformung des Stempels zu einer automatischen Lösung des Fixierelements bei Drehung der Rotorwelle gegenüber dem Stator bei Bewegung des Drehgestells oder Schienenfahrzeugs. Durch diese quasi automatische Auflösung des Stempels des Fixierelements bei Bewegung der elektrischen Maschine gegen den Widerstand des Fixierelements ist es nicht zwingend erforderlich, das Fixierelement vor der Inbetriebnahme des Schienenfahrzeugs zu entfernen und es kann immer ein optimaler Schutz der elektrischen Maschine bzw. deren Lager bei gleichzeitiger Verhinderung einer Beschädigung durch nicht entfernte Fixierelemente erzielt werden.

Bevorzugter Weise besteht der Stempel aus einem ungiftigen rückstandsfrei schmelzbaren Material. Dadurch kann es zu einer rückstandsfreien Auflösung des Stempels kommen, wenn das Drehgestell oder das Schienenfahrzeug nach dem Einbau der elektrischen Maschine bewegt wird.

Wenn der Stempel an die Form jenes Teils der Rotorwelle angepasst ist, an welche der Stempel anpressbar ist, kann die für die Fixierung der Rotorwelle gegenüber dem Stator erforderliche Kraft optimal übertragen werden. Bei einer Anwendung des Fixierelements in radialer Richtung am Mantel der Rotorwelle kann der Stempel eine teilweise zylinderförmige Form aufweisen, wohingegen bei einer axialen Anwendung des Stempels an dem Ende der Rotorwelle eine flache Oberfläche des Stempels vorteilhaft sein wird.

Der Stempel kann im 3D-Druckverfahren hergestellt sein. Auf diese Weise kann der Stempel einfach und kostengünstig als Teil des Fixierelements gebildet werden.

Das Fixierelement ist beispielsweise durch eine Schraube mit Kontermutter gebildet, an dessen freiem Ende der Schraube der Stempel angeordnet ist. Die Schraube mit Kontermutter wird an einer geeigneten Stelle der elektrischen Maschine, beispielsweise am Lagerschild oder an anderen Komponenten, befestigt.

Gelöst wird die erfindungsgemäße Aufgabe auch durch eine oben genannte elektrische Maschine, bei der zumindest ein oben beschriebenes Fixierelement zwischen Stator und Rotorwelle angeordnet ist. Zu den dadurch erzielbaren Vorteilen wird auf die obige Beschreibung in Zusammenhang mit dem Fixierelement verwiesen.

Beispielsweise ist zumindest ein Fixierelement radial angeordnet, sodass der Stempel auf den Mantel der Rotorwelle anpressbar ist. In diesem Fall wird der Stempel an Form und Stelle, an der er an die Rotorwelle gepresst wird, angepasst werden und so z.B. eine teilzylindrische Form aufweisen.

Alternativ dazu oder auch zusätzlich kann zumindest ein Fixierelement auch axial angeordnet sein, sodass der Stempel auf ein axiales Ende der Rotorwelle anpressbar ist. Vorteil der axialen Anordnung des Fixierelements ist die einfachere Montage und Demontage, da die axialen Enden der elektrischen Maschine üblicherweise leichter zugänglich sind als es bei einer radialen Anordnung der Fall ist.

Gemäß einem Ausführungsbeispiel der elektrischen Maschine sind beiderseits der Rotorwelle zwei Fixierelemente axial angeordnet, sodass die Stempel auf beide axialen Enden der Rotorwelle anpressbar sind. Durch diese Maßnahme wird eine noch bessere Fixierung der Rotorwelle gegenüber dem Stator zum Schutz der Lager beim Transport der nichtrotierenden elektrischen Maschine erzielt.

Die vorliegende Erfindung wird anhand der beigefügten Zeichnungen näher erläutert. Darin zeigen
- Fig. 1: eine Prinzipdarstellung eines Schienenfahrzeugs mit Drehgestellen und darin angeordneten elektrischen Maschinen;
- Fig. 2: ein Schnittbild durch eine elektrische Maschine mit einer Ausführungsform einer erfindungsgemäßen Transportsicherung in Form eines Fixierelements;
- Fig. 3: eine Detailansicht auf eine Ausführungsform des Fixierelements in vergrößerter Darstellung; und
- Fig. 4: eine Detailansicht auf eine weitere Ausführungsform eines Fixierelements in vergrößerter Darstellung.

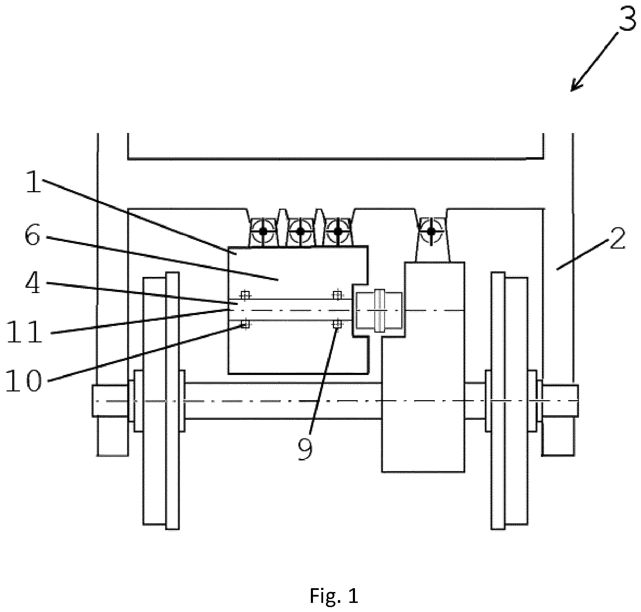

Fig. 1 zeigt eine Prinzipdarstellung eines Schienenfahrzeugs 3 mit einem Drehgestell 2 und einer darin angeordneten elektrischen Maschine 1. In der elektrischen Maschine 1 ist ein Fixierelement 11 angeordnet, welches die Rotorwelle 4 der elektrischen Maschine 1 gegenüber dem Stator 6 fixiert, um das Lager 9 an der Antriebsseite AS und das Lager 10 an der Nichtantriebsseite NAS vor Schäden zu bewahren. Dadurch wird es möglich, die elektrische Maschine 1 sicher an den Ort des Einbaus in ein Drehgestell 2 und schließlich an den Ort des Einbaus des Drehgestells 2 mit der eingebauten elektrischen Maschine 1 in das Schienenfahrzeug 3 zu transportieren. Wird vergessen, die Fixierelemente 11 in der elektrischen Maschine 1 vor der Inbetriebnahme des Schienenfahrzeugs 3 oder der Bewegung der Drehgestelle 2 zu lösen oder wird dies bewusst vorgenommen, wird die Fixierung durch die plastische Verformung des Stempels 12 des Fixierelements 11 automatisch gelöst, und die Bewegung des Drehgestells 2 oder des Schienenfahrzeugs 3 gegen den Widerstand des Fixierelements 11 ermöglicht.

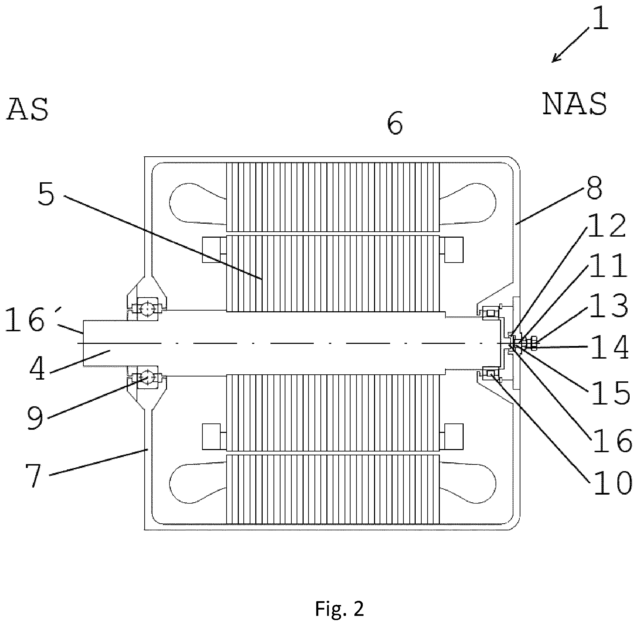

In Fig. 2 ist ein Schnittbild durch eine elektrische Maschine 1 mit einer Ausführungsform einer erfindungsgemäßen Transportsicherung in Form eines Fixierelements 11 dargestellt. Die elektrische Maschine 1 beinhaltet eine Rotorwelle 4, welche drehfest mit dem Rotor 5 verbunden ist, der gegenüber dem Stator 6 rotiert. Beiderseits der Rotorwelle 4 sind im Lagerschild 7 an der Antriebsseite AS und im Lagerschild 8 an der Nichtantriebsseite NAS entsprechende Lager 9 bzw. 10 zur drehbaren Aufnahme der Rotorwelle 4 angeordnet. Wird die elektrische Maschine 1 mit stillstehendem Rotor 5 transportiert, kann es durch Vibrationen und Stöße der Rotorwelle 4 gegenüber dem Stator 6 zu Schäden in den Lagern 9, 10 kommen, welche eine Veränderung der Oberflächenstruktur der Lager 9, 10 bewirken. Durch derartige Stillstandsmarken in den Lagern 9, 10 kann es zu Geräuschentwicklungen bis zu Lagerschäden oder sogar totalen Motorschäden kommen.

Erfindungsgemäß ist ein Fixierelement 11 zur Fixierung der Rotorwelle 4 der elektrischen Maschine 1 gegenüber deren Stator 6 vorgesehen, welches einen Stempel 12 zum Anpressen an die Rotorwelle 4 aufweist, der aus unterhalb 100°C verformbarem thermoplastischem Kunststoff, vorzugsweise Polylaktat, gebildet. Das Fixierelement 11 kann eine Schraube 13 und eine Kontermutter 14 beinhalten, an dessen freiem Ende 15 der Stempel 12 angeordnet ist. Über die Schraube 13 und die Kontermutter 14 wird das Fixierelement 11 am Lagerschild 8 befestigt. Der Stempel 12 aus thermoplastisch verformbarem Kunststoff wird an das axiale Ende 16 der Rotorwelle 4 gepresst. Wird nun die Rotorwelle 4 gegen den Widerstand des Fixierelements 11 gegenüber dem Stator 6 gedreht, kommt es durch die Reibung zwischen dem axialen Ende 16 der Rotorwelle 4 und dem Stempel 12 zu einer Wärmeentwicklung, welche zu einer Verformung des Stempels 12 und zu einem im Wesentlichen rückstandsfreien Schmelzen des Materials des Stempels 12 führt. Dadurch kann eine Beschädigung der elektrischen Maschine 1 auch dann verhindert werden, wenn vergessen wird, das Fixierelement 11 zu lösen oder dies sogar bewusst vorgenommen wird.

Der Stempel 12 kann an die Form des Teils der Rotorwelle 4 angepasst sein, an welche der Stempel 12 angepresst wird. Vorzugsweise wird der Stempel 12 in einem 3D-Druckverfahren aus dem geeigneten thermoplastischen Kunststoff hergestellt.

Natürlich kann eine Transportfixierung auch mit mehreren Fixierelementen 11, beispielsweise beiderseits axial angeordneten Fixierelementen 11, an der Antriebsseite AS und Nichtantriebsseite NAS der elektrischen Maschine 1 erfolgen.

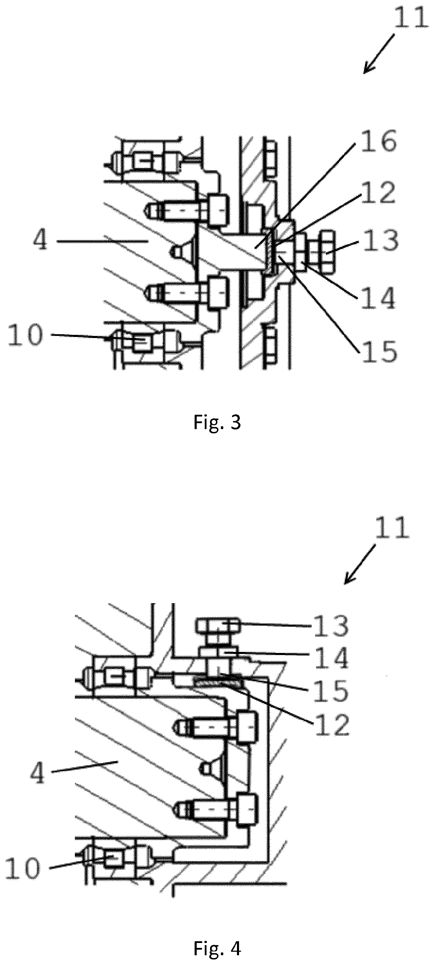

Fig. 3 zeigt eine Detailansicht auf eine Ausführungsform des Fixierelements 11 in vergrößerter Darstellung. Bei dieser Darstellung ist, wie in Fig. 2 beschrieben, der Stempel 12 des Fixierelements 11 an das axiale Ende 16 der Rotorwelle 4 oder an ein entsprechendes mit dem Ende 16 der Rotorwelle 4 verbundenes Element angepresst und es wird dadurch eine Fixierung der Rotorwelle 4 gegenüber dem Stator 6 und ein Schutz des Lagers 10 bewirkt.

Schließlich zeigt Fig. 4 eine Detailansicht auf eine weitere Ausführungsform eines Fixierelements in vergrößerter Darstellung. Bei dieser Ausführungsvariante ist das Fixierelement 11 so angeordnet, dass der Stempel 12 an die Mantelfläche der Rotorwelle 4 an dessen Ende anpressbar ist und eine Fixierung der Rotorwelle 4 gegenüber dem Stator 6 und somit ein Schutz des Lagers 10 erzielt werden kann. Wie bereits bei den Ausführungsbeispielen gemäß den Fig. 2 und 3, beinhaltet auch hier das Fixierelement 11 eine Schraube 13 und eine Kontermutter 14, wobei am freien Ende 15 der Schraube 13 der Stempel 12 angeordnet ist.

Die vorliegende Erfindung zeichnet sich durch besondere Einfachheit aber gleichzeitig einen optimalen Schutz der elektrischen Maschine 1 vor Lagerschäden aus.

## Patentansprüche

1. Fixierelement (11) zur Fixierung der Rotorwelle (4) einer elektrischen Maschine (1) an deren Stator (6), das Fixierelement aufweisend einen Stempel (12) zum Anpressen an die Rotorwelle (4), welcher Stempel (12) aus Kunststoff besteht, **dadurch gekennzeichnet, dass** der Stempel (12) aus unterhalb 100°C verformbarem thermoplastischem und rückstandsfrei schmelzbarem Kunststoff besteht, sodass es durch eine Drehung der Rotorwelle (4) gegen Widerstand des Fixierelements (11) gegenüber dem Stator (6) zu einer Wärmeentwicklung kommt, welche zu einer Verformung des Stempels (12) und zu einem rückstandsfreien Schmelzen des Materials des Stempels (12) führt.

2. Fixierelement (11) nach Anspruch 1, **dadurch gekennzeichnet, dass** der Stempel (12) an die Form jenes Teils der Rotorwelle (4) angepasst ist, an welche der Stempel (12) anpressbar ist.

3. Fixierelement (11) nach Anspruch 1 oder 2, **dadurch gekennzeichnet, dass** der Stempel (12) im 3D-Druckverfahren hergestellt ist.

4. Fixierelement (11) nach einem der Ansprüche 1 bis 3, **gekennzeichnet durch** eine Schraube (13) mit Kontermutter (14), wobei am freien Ende (15) der Schraube (13) der Stempel (12) angeordnet ist.

5. Elektrische Maschine (1), insbesondere elektrische Traktionsmaschine zur Anordnung in einem Drehgestell (2) eines Schienenfahrzeugs (3), mit einem mit einer Rotorwelle (4) drehfest verbundenen Rotor (5), einem Stator (6) und beiderseits angeordneten Lagerschilden (7, 8), enthaltend Lager (9, 10) zur drehbaren Aufnahme der Rotorwelle (4), **dadurch gekennzeichnet, dass** zumindest ein Fixierelement (11) nach einem der Ansprüche 1 bis 4 zwischen Stator (6) und Rotorwelle (4) angeordnet ist.

6. Elektrische Maschine (1) nach Anspruch 5, **dadurch gekennzeichnet, dass** zumindest ein Fixierelement (11) radial angeordnet ist, sodass der Stempel (12) auf den Mantel der Rotorwelle (4) anpressbar ist.

7. Elektrische Maschine (1) nach Anspruch 5 **dadurch gekennzeichnet, dass** zumindest ein Fixierelement (11) axial angeordnet ist, sodass der Stempel (12) auf ein axiales Ende (16) der Rotorwelle (4) anpressbar ist.

8. Elektrische Maschine (1) nach einem der Ansprüche 5 bis 7, **dadurch gekennzeichnet, dass** beiderseits der Rotorwelle (4) zwei Fixierelemente (11) axial angeordnet sind, sodass die Stempel (12) auf beide axiale Enden (16, 16') der Rotorwelle (4) anpressbar sind.

## Claims

1. Fixing element (11) for fixing the rotor shaft (4) of an electric machine (1) on the stator (6) of said machine, the fixing element having a ram (12) for pressing against the rotor shaft (4), which ram (12) is made of plastics material, **characterised in that** the ram (12) is made of a thermoplastic material that is deformable below 100°C and can melt without residue such that rotation of the rotor shaft (4) relative to the stator (6) and against resistance from the fixing element (11) generates heat which leads to the ram (12) being deformed and the material of the ram (12) melting without residue.

2. Fixing element (11) according to claim 1, **characterised in that** the ram (12) is adapted to the shape of the part of the rotor shaft (4) against which the ram (12) can be pressed.

3. Fixing element (11) according to either claim 1 or claim 2, **characterised in that** the ram (12) is produced by 3D printing.

4. Fixing element (11) according to any of claims 1 to 3, **characterised by** a screw (13) comprising a lock nut (14), the ram (12) being arranged on the free end (15) of the screw (13).

5. Electric machine (1), in particular an electric traction machine for arrangement in a bogie (2) of a rail vehicle (3), comprising a rotor (5) connected to a rotor shaft (4) for rotation therewith, a stator (6) and end shields (7, 8) at both ends, which end shields contain bearings (9, 10) for rotatably receiving the rotor shaft (4), **characterised in that** at least one fixing element (11) according to any of claims 1 to 4 is arranged between the stator (6) and the rotor shaft (4).

6. Electric machine (1) according to claim 5, **characterised in that** at least one fixing element (11) is arranged radially such that the ram (12) can be pressed onto the outer surface of the rotor shaft (4).

7. Electric machine (1) according to claim 5, **characterised in that** at least one fixing element (11) is arranged axially such that the ram (12) can be pressed onto an axial end (16) of the rotor shaft (4).

8. Electric machine (1) according to any of claims 5 to 7, **characterised in that** two fixing elements (11) are arranged axially one at both ends of the rotor shaft (4) such that the rams (12) can be pressed onto both axial ends (16, 16') of the rotor shaft (4).

## Revendications

1. Elément de fixation (11) pour la fixation de l'arbre de rotor (4) d'une machine électrique (1) à son stator (6), l'élément de fixation présentant un tampon (12) destiné à presser sur l'arbre de rotor (4), lequel tampon (12) consiste en matière synthétique, **caractérisé en ce que** le tampon (12) consiste en matière synthétique thermoplastique déformable en dessous de 100°C et pouvant fondre sans résidu, de sorte que du fait d'une rotation de l'arbre de rotor (4) contre la résistance de l'élément de fixation (11) par rapport au stator (6) il se produit un dégagement de chaleur qui conduit à une déformation du tampon (12) et à une fusion sans résidu du matériau du tampon (12).

2. Elément de fixation (11) selon la revendication 1, **caractérisé en ce que** le tampon (12) est adapté à la forme de la partie de l'arbre de rotor (4) sur laquelle le tampon (12) peut être pressé.

3. Elément de fixation (11) selon la revendication 1 ou 2, **caractérisé en ce que** le tampon (12) est produit selon le procédé d'impression 3D.

4. Elément de fixation (11) selon l'une des revendications 1 à 3, **caractérisé par** une vis (13) avec contre-écrou (14), où le tampon (12) est disposé à l'extrémité libre (15) de la vis (13).

5. Machine électrique (1), en particulier machine de traction électrique destinée à être disposée dans un bogie (2) d'un véhicule ferroviaire (3), avec un rotor (5) relié de manière solidaire en rotation à un arbre de rotor (4), un stator (6) et des flasques (7, 8) disposés des deux côtés, contenant des paliers (9, 10) pour recevoir de manière rotative l'arbre de rotor (4), **caractérisée en ce qu'**au moins un élément de fixation (11) selon l'une des revendications 1 à 4 est disposé entre le stator (6) et l'arbre de rotor (4).

6. Machine électrique (1) selon la revendication 5, **caractérisée en ce qu'**au moins un élément de fixation (11) est disposé radialement, de sorte que le tampon (12) peut être pressé sur la chemise de l'arbre de rotor (4).

7. Machine électrique (1) selon la revendication 5 **caractérisée en ce qu'**au moins un élément de fixation (11) est disposé axialement, de sorte que le tampon (12) peut être pressé sur une extrémité axiale (16) de l'arbre de rotor (4).

8. Machine électrique (1) selon l'une des revendications 5 à 7, **caractérisée en ce que** deux éléments de fixation (11) sont disposés axialement des deux côtés de l'arbre de rotor (4), de sorte que les tampons (12) peuvent être pressés sur les deux extrémités axiales (16, 16') de l'arbre de rotor (4).
